# EUROPÄISCHE PATENTSCHRIFT

(11) **EP 2 673 524 B1**
(45) Veröffentlichungstag und Bekanntmachung des Hinweises auf die Patenterteilung: **06.05.2015**
(21) Anmeldenummer: 12700315.0
(22) Anmeldetag: 12.01.2012
(51) Int. Cl.: F16D 65/092

(54) **BREMSBELAGANORDNUNG FÜR EINE SCHEIBENBREMSE UND VERFAHREN ZUM HERSTELLEN EINER BREMSBELAGANORDNUNG**
BRAKE LINING ARRANGEMENT FOR A DISK BRAKE AND METHOD FOR PRODUCING A BRAKE LINING ARRANGEMENT
ENSEMBLE GARNITURE DE FREIN POUR UN FREIN À DISQUE ET PROCÉDÉ DE FABRICATION D'UN ENSEMBLE GARNITURE DE FREIN

(30) Priorität: 10.02.2011 DE 102011010912
(43) Veröffentlichungstag der Anmeldung: 18.12.2013
(73) Patentinhaber: Lucas Automotive GmbH, 56070 Koblenz (DE)
(72) Erfinder: GIESE, Hans-Martin, 56751 Polch (DE); CHEN, Xueming, 22926 Ahrensburg (DE); LINDEMANN, Sylvester, 56070 Koblenz (DE)
(74) Vertreter: Thum, Bernhard
(86) Internationale Anmeldenummer: PCT/EP2012/000129
(87) Internationale Veröffentlichungsnummer: WO 2012/107155

(56) Entgegenhaltungen:
- EP-A1- 1 369 199
- DE-A1- 10 044 875
- DE-A1-102004 026 853
- DE-U1- 29 817 467
- GB-A- 1 302 745
- JP-A- 2004 324 763
- US-A- 5 856 390

## Beschreibung

Die vorliegende Erfindung betrifft eine Bremsbelaganordnung für einen Scheibenbremse sowie ein Verfahren zum Herstellen einer solchen Bremsbelaganordnung. Die Bremsbelaganordnung umfasst einen Bremsbelagträger und einen daran angebrachten Reibbelag, der zur Erzielung einer Reibwirkung mit einer Reibfläche an eine Bremsscheibe der Scheibenbremse anlegbar ist, wobei der Reibbelag in wenigstens einem Randbereich mit einer Fase versehen ist, die an einer Fasenkante in die Reibfläche übergeht.

Derartige Bremsbelaganordnungen sind aus dem Stand der Technik bekannt. So wurde erkannt, dass die Anbringung von Fasen im Randbereich der jeweiligen Reibbeläge eine wirksame Maßnahme darstellt, um Geräuschemissionen zu begegnen, die beim Bremsen auftreten können. Derartige unerwünschte Geräuschemissionen werden beispielsweise durch reibungsbedingte Schwingungen der Bremsbelaganordnung selbst oder weiterer Komponenten der Scheibenbremsanordnung hervorgerufen. Im Bereich der Resonanzfrequenzen der Anordnung kann es zu deutlich hörbaren Geräuschen kommen, die zur Erhöhung des Fahrkomforts unbedingt zu vermeiden sind. Aus diesem Grund wurden im Stand der Technik verschiedene Möglichkeiten zur Anbringung von Fasen an den Reibbelägen bekannter Bremsbelaganordnungen vorgesehen. So kennt der Stand der Technik Fasen mit im Wesentlichen geradlinigen knickfreien Fasenkanten, die entweder parallel zueinander verlaufen oder bezüglich der Bremsscheibe segmentartig zueinander geneigt sind. Gemäß einer Weiterbildung im Stand der Technik sind Fasen mit geknicktem Fasenkantenverlauf vorgesehen, sogenannten Diamantfasen, deren Bezeichnung in Anlehnung an einen Diamantschliff mit zueinander geneigten Schliffflächen gewählt wurde.

Derartige diamantförmige Fasen sind beispielsweise aus dem Dokument US 5,535,859 bekannt. Darin ist beschrieben, dass der Reibbelag bezüglich einer Rotationsbewegung einer mit diesem in Wechselwirkung tretenden Bremsscheibe sowohl an seiner vorlaufenden Seite als auch an seiner nachlaufenden Seite mit einem Fasenschliff versehen ist, bei dem auf jeder Seite der Reibfläche zwei zueinander geneigte Fasenflächen vorgesehen sind. Diese Ausgestaltung des Reibbelags führt zwar zu einer erheblichen Reduzierung von Geräuschemissionen. Problematisch bei dieser Reibbelaggeometrie ist allerdings, dass deren Fertigung relativ aufwändig ist, weil mehrere Schleifbearbeitungsschritte erforderlich sind, um diese zueinander geneigten Fasenflächen zu erreichen. Gerade in der Massenfertigung, die für die wirtschaftliche Herstellung derartiger Bremsbelaganordnungen stets zu optimieren ist, ist das Erfordernis mehrfacher Arbeitsschritte aber problematisch, weil es zeitintensiv ist und hohe Kosten nach sich zieht.

Eine vergleichbare Situation findet sich bei der Bremsbelaganordnung gemäß dem US-Patent US 7,275,625 B2. Auch dieses Dokument beschreibt einen Reibbelag einer Bremsbelaganordnung mit Diamantschliff, d.h. mit zwei zueinander geneigten Fasenflächen und geknicktem Fasenkantenverlauf, der dem Problem einer zeit- und damit kostenintensiven Fertigung unterliegt. In diesem Stand der Technik sind auch die Probleme einfacher gestalteter Fasenschliffe, insbesondere mit zueinander parallelen oder v-förmig zueinander verlaufenden knickfreien Fasenkanten erläutert. Beide Geometrien haben das Problem verhältnismäßig geringer Auflageflächen und einer unzureichenden Anpassung an die unterschiedlichen Umfangsgeschwindigkeiten der Bremsscheibe abhängig von dem Radius.

Das Dokument DE 10 2009 008 769 B3 zeigt ein Verfahren und eine Vorrichtung zur Herstellung von Bremsbelagträgern.

Es ist Aufgabe der vorliegenden Erfindung, eine Bremsbelaganordnung für eine Scheibenbremse der eingangs bezeichneten Art und ein Verfahren zum Herstellen einer solchen Bremsbelaganordnung bereitzustellen, mit der eine wirkungsvolle Geräuschunterdrückung während eines Bremsvorgangs erzielt wird, wobei gleichzeitig über den gesamten Bremsbelag ein gleichmäßiger Verschleiß gewährleistet ist und wobei die Bremsbelaganordnung gegenüber dem Stand der Technik unter geringerem fertigungstechnischen Aufwand herzustellen ist.

Diese Aufgabe wird durch eine Bremsbelaganordnung für eine Scheibenbremse mit den eingangs bezeichneten Merkmalen gelöst, bei der vorgesehen ist, dass die Fasenkante einen gekrümmten Verlauf aufweist.

Mit der Erfindung werden die Vorteile hinsichtlich eines gleichmäßigen Verschleißes, die beispielsweise ein Reibbelag mit einer Diamantfase bietet, mit den Vorteilen einer einfacheren Herstellung eines geradlinigen Fasenkantenverlaufs verknüpft, indem die Fasenkante einen gekrümmten Verlauf aufweist. So ist es möglich, in einem Schleifverfahren zur Herstellung der erfindungsgemäßen Bremsbelaganordnung in Abweichung von der Herstellung einer Diamantfase nicht mehrere Schleifschritte durchführen zu müssen, die zwischen den einzelnen Schleifschritten eine Neuausrichtung der Schleifmaschine relativ zu dem zu bearbeiteten Reibbelag erfordern. Vielmehr reicht es aus, die Schleifscheibe derart in einer kontinuierlichen Bewegung über den Reibbelag zu führen, dass man während dieser kontinuierlichen Bewegung einen gekrümmten Verlauf der Fasenkante erreicht. Alternativ kann auch vorgesehen sein, dass der Reibbelag in einer kontinuierlichen Bewegung an der Schleifscheibe vorbeigeführt wird. Dadurch kann die Geometrie des Reibbelags ähnlich wie beim Diamantschliff unter dem Aspekt eines gleichmäßigen Verschleißes optimiert werden, wobei der Fertigungsaufwand unter Vermeidung mehrerer Schleifschritte je Fase minimiert werden kann.

Im Zusammenhang mit der vorliegenden Erfindung ist vorgesehen, dass die Fasenkante einen stetig gekrümmten Verlauf aufweist. Knicke im Fasenkantenverlauf sollen erfindungsgemäß vermieden werden, was die Effizienz des Fertigungsverfahrens erhöht.

Vorzugsweise kann erfindungsgemäß vorgesehen sein, dass die Fase bezüglich der Rotationsrichtung der Bremsscheibe an einer vorlaufenden oder/und einer nachlaufenden Seite des Reibbelags ausgebildet ist. Je nach Bedarf und in Abstimmung mit den Erfordernissen reduzierter Geräuschemissionen ist es demnach möglich, lediglich eine von vorlaufender und nachlaufender Seite des Reibbelags oder beide mit einer entsprechenden Fase zu versehen.

Eine Weiterbildung der Erfindung sieht vor, dass die Fasenkante bezüglich der Reibfläche konvex gekrümmt verläuft. Die Reibfläche ist daher seitlich "bauchig" ausgebildet. Alternativ ist es auch möglich, die Fasenkanten konkav bezüglich der Reibfläche auszubilden.

Ferner kann erfindungsgemäß vorgesehen sein, dass die Fasenkante kreisbogenförmig gekrümmt ist. Eine solche kreisbogenförmige Krümmung der Fasenkante lässt sich mit verhältnismäßig einfachen fertigungstechnischen Mitteln, insbesondere mit einfachen Schleifmaschinen herstellen. Es sind allerdings auch anderweitige Fasenkantenkonturen denkbar, wie beispielsweise Ellipsen oder anderweitig gekrümmte Fasenkanten.

Zur Vereinfachung der Herstellung sind die Fasenkanten an der bezüglich der Rotationsrichtung der Bremsscheibe vorlaufenden Seite sowie an der bezüglich der Rotationsrichtung der Bremsscheibe nachlaufenden Seite geometrisch zueinander komplementär ausgebildet. Vorzugsweise kann vorgesehen sein, dass die Fasenkante an der vorlaufenden Seite und an der nachlaufenden Seite jeweils kreisbogenförmigen Verlauf aufweist, wobei die Kreisbögen mit im Wesentlichen gleichem Radius ausgebildet ist.

Im Hinblick auf eine möglichst einfache Herstellung der erfindungsgemäßen Bremsbelaganordnung ist vorgesehen, dass die Fase in einem einzigen materialabtragenden Fertigungsschritt hergestellt ist, bei dem ein materialabtragendes Werkzeug entlang einer dem gekrümmten Verlauf der Fasenkante entsprechenden Bearbeitungsbahn geführt wird.

Die Erfindung betrifft ferner ein Verfahren zum Herstellen einer Bremsbelaganordnung für eine Scheibenbremse der vorstehend beschriebenen Art, wobei die Bremsbelaganordnung einen Bremsbelagträger und einen daran angebrachten Reibbelag aufweist, der zur Erzielung einer Reibwirkung mit einer Reibfläche an eine Bremsscheibe anlegbar ist, wobei der Reibbelag in wenigstens einem Randbereich mit einer Fase versehen ist, die an einer Fasenkante in die Reibfläche übergeht, wobei die Fasenkante in einem einzigen materialabtragenden Fertigungsschritt hergestellt wird, bei dem ein materialabtragendes Werkzeug entlang einer dem gekrümmten Verlauf der Fasenkante entsprechenden Bearbeitungsbahn geführt wird, oder bei dem die Bremsbelaganordnung entlang einer dem gekrümmten Verlauf der Fasenkante entsprechenden Bearbeitungsbahn relativ zu einem materialabtragenden Werkzeug geführt wird.

Bei diesem Verfahren kann vorgesehen sein, dass die Bearbeitungsbahn kreisbogenförmig oder anderweitig stetig gekrümmt ausgebildet ist. Ferner ist es erfindungsgemäß möglich, dass die Fase in einem einzigen Schleifbearbeitungsschritt hergestellt wird.

Die Erfindung wird im Folgenden beispielhaft anhand der beiliegenden Figuren erläutert. Es stellen dar:
- Fig. 1: eine Vorderansicht auf den Reibbelag einer erfindungsgemäßen Bremsbelaganordnung;
- Fig. 2: eine entsprechende Ansicht auf eine Bremsbelaganordnung gemäß dem Stand der Technik;
- Fig. 3: eine vergleichende Darstellung zur Herstellung einer erfindungsgemäßen Bremsbelaganordnung sowie eine Bremsbelaganordnung gemäß dem Stand der Technik.

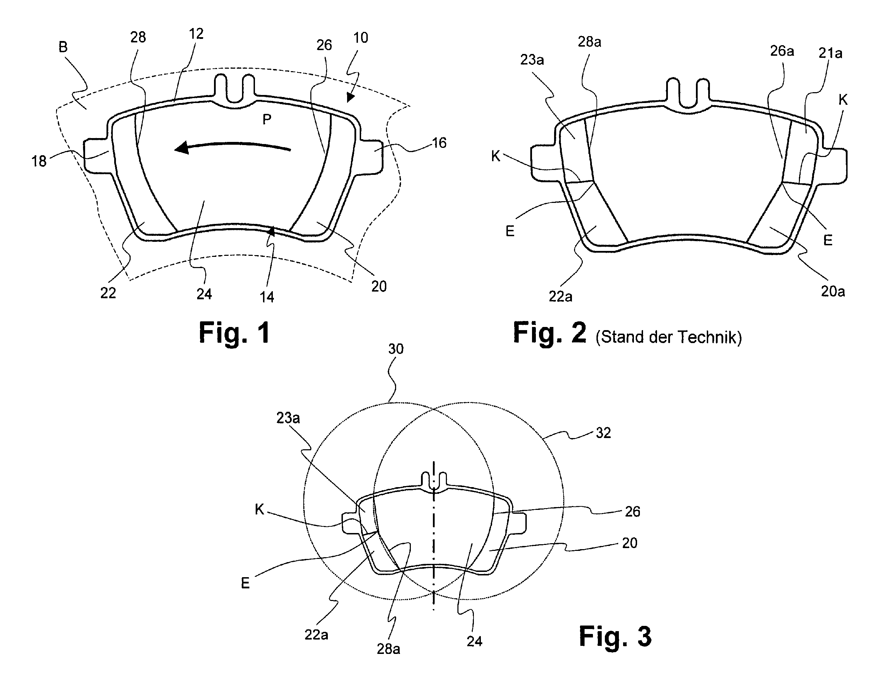

In Fig. 1 ist eine erfindungsgemäße Bremsbelaganordnung in Vorderansicht auf den Reibbelag dargestellt und allgemein mit 10 bezeichnet. Diese umfasst einen Bremsbelagträger 12, an dem ein Reibbelag 14 angebracht ist. Der Bremsbelagträger 12 weist zwei seitlich vorstehende Laschen 16 und 18 auf, mit denen er beispielsweise mit einer Federanordnung gekoppelt ist und in einem Führungsschacht einer Scheibenbremsanordnung verlagerbar geführt ist.

Der Bremsbelagträger 14 ist plattenförmig ausgebildet, beispielsweise in Form einer Metallplatte. Er ist in der Scheibenbremsanordnung anbringbar, bei der eine Bremsscheibe B (mit strichlierten Linien angedeutet) entsprechend Pfeil P an dem rotationsfest gehaltenen Reibbelag vorbeiläuft. Der Reibbelag 14 weist zwei Fasen 20, 22 auf, zwischen denen eine Reibfläche 24 angeordnet ist. Die Reibfläche 24 kommt zur Erzielung einer Bremswirkung in Anlage mit der Bremsscheibe B. Die Fase 20 ist also bezüglich der Rotationsrichtung P der Bremsschreibe im vorlaufenden Bereich der Bremsbelaganordnung 10 angeordnet, wohingegen die Fase 22 bezüglich dieser Rotationsrichtung im nachlaufenden Bereich angeordnet ist.

Man erkennt, dass die Fasen 20 und 22, die sich in einem Winkel von etwa 20 bis 40° relativ zur Reibfläche 24 (Zeichenebene) erstrecken, jeweils mit einer gekrümmten Fasenkante 26, 28 in die Reibfläche 24 übergehen. Beide Fasenkanten 26, 28 sind bezüglich der Reibfläche 24 konvex, d.h. nach außen gekrümmt. Dadurch ergibt sich, dass der reibwirksame Abschnitt der Reibfläche 24 im radial inneren Bereich mit geringerer Breite ausgeführt ist als radial weiter außen. Diese Gestaltung wird deshalb gewählt, weil die Bremsscheibe B im radial äußeren Bereich eine größere Umfangsgeschwindigkeit aufweist, was auch größeren Verschleiß nach sich zieht, als radial weiter innen. Zur Vermeidung von Verschleißunterschieden in radialer Richtung entlang der Reibfläche 24 wird daher üblicherweise die Reibfläche in Richtung nach radial außen verbreitert. Neben der Vermeidung von Verschleißunterschieden haben die beiden Fasen 20, 22 den an sich bekannten Effekt einer Reduzierung der Geräuschemission während des Bremsvorgangs.

Man erkennt aber, dass die Fasen 20, 22 kontinuierlich ausgeführt sind und entlang ihrer gekrümmten Fasenkante 26, 28 jeweils einen stetigen Verlauf haben. Dies führt dazu, dass die Fasenkanten 26, 28 knickfrei sind, wie in Fig. 1 gezeigt.

Im Gegensatz dazu ist in Fig. 2 eine Reibbelaganordnung gemäß dem Stand der Technik gezeigt, bei der dieselben Komponenten wie bei der Erfindung mit denselben Bezugszeichen, jedoch mit dem Buchstaben a bezeichnet sind. Man erkennt, dass dort die Fasenkanten 26a, 28a mit einem Knick K versehen sind und somit keinen stetigen Verlauf haben. Darüber hinaus erkennt man, dass die Fasen jeweils zwei Flächenbereiche 20a, 21a und 22a, 23a aufweisen, die jeweils durch eine Kante E voneinander getrennt sind und die unterschiedliche Neigungen haben. Eine derartige Gestaltung der Fasen bezeichnet man auch als Diamantfase, weil diese Fasen ähnlich wie bei einem Diamantschliff zueinander geneigt verlaufende Flächen mit scharfen Kanten aufweisen. Es versteht sich, dass die Herstellung solcher Fasen 20a, 22a jeweils relativ aufwändig ist, weil eine zur Herstellung verwendete Schleifscheibe für jeden Flächenabschnitt 20a, 21a und 22a,23a neu ausgerichtet und entlang der geradlinigen Abschnitte der Fasenkanten 26a, 28a geführt werden muss. Zur Herstellung der vier Fasen 20a, 21a und 22a, 23a muss also das Schleifwerkzeug insgesamt viermal angesetzt werden.

Anders stellt sich die Situation bei der Erfindung dar, wie sie in Fig. 1 gezeigt ist. Zur Erläuterung der Unterschiede wird zusätzlich auf Fig. 3 verwiesen, die eine Gegenüberstellung von Stand der Technik (linke Seite) und vorliegender Erfindung (rechte Seite) zeigt. Dort erkennt man, dass die Fase 20 gemäß der vorliegenden Erfindung mit der gerundet verlaufenden Fasenkante 26 dadurch hergestellt wird, dass das Schleifwerkzeug entlang einer Kreisbahn geführt wird, so dass sich die gerundete Fasenkante 26 ergibt, die ein Segment des Kreises 30 repräsentiert. In Fig. 3, linke Seite, ist hingegen gezeigt, dass die dortige Diamantfase mit geknickter Fasenkante 28a und mit den zwei verschiedenen zueinander geneigten Bereichen 22a, 23a in Abweichung von der Kreisbahn 32 geknickt ausgebildet ist und durch mehrfaches Ansetzen des Schleifwerkzeugs hergestellt werden muss.

Der Vergleich gemäß Fig. 3 zeigt in einfacher Weise, dass bei einer Reibbelaganordnung mit Diamantfase (geknickte Fasenkurve) gemäß dem Stand der Technik pro Bremsbelaganordnung insgesamt wenigstens zwei zusätzliche Arbeitsschritte erforderlich sind, nämlich je Fase jeweils zwei Arbeitsschritte, wohingegen gemäß der vorliegenden Erfindung bei jeder Belaganordnung nur ein Arbeitsschritt pro Fase, d.h. insgesamt zwei Arbeitsschritte erforderlich sind. Dadurch lässt sich die Bremsbelaganordnung gemäß der vorliegenden Erfindung wesentlich kostengünstiger und einfacher herstellen, als dies bei dem Stand der Technik der Fall ist. Nichtsdestotrotz werden dieselben Vorteile erreicht, nämlich eine deutliche Reduzierung der Geräuschemission durch Anbringung der Fasen sowie ein Vergleichmäßigung des Verschleißes über die gesamte Reibfläche 24 durch die konvexe Kontur der Fasenkanten 26 und 28.

## Patentansprüche

1. Bremsbelaganordnung (10) für eine Scheibenbremse mit einem Bremsbelagträger (12) und einem daran angebrachten Reibbelag (14), der zur Erzielung einer Reibwirkung mit einer Reibfläche (24) an eine Bremsscheibe anlegbar ist, wobei der Reibbelag (14) wenigstens entlang einesRandbereiches, der sich im wesentlichen in radialer Richtung erstreckt, mit einer Fase (20, 22) versehen ist, die an einer Fasenkante (26, 28) in die Reibfläche (24) übergeht,
**dadurch gekennzeichnet, dass** die Fasenkante (26, 28) einen stetig gekrümmten Verlauf aufweist und dass die Fase (20, 22) in einem einzigen materialabtragenden Fertigungsschritt hergestellt ist, bei dem ein materialabtragendes Werkzeug entlang einer dem gekrümmten Verlauf der Fasenkante (26, 28) entsprechenden Bearbeitungsbahn geführt wird, oder bei dem die Bremsbelaganordnung (10) entlang einer dem gekrümmten Verlauf der Fasenkante (26, 28) entsprechenden Bearbeitungsbahn relativ zum materialabtragenden Werkzeug geführt wird.

2. Bremsbelaganordnung (10) nach Anspruch 1,
**dadurch gekennzeichnet, dass** die Fase (20, 22) bezüglich der Rotationsrichtung der Bremsscheibe an einer vorlaufenden oder/und einer nachlaufenden Seite des Reibbelags (14) ausgebildet ist.

3. Bremsbelaganordnung (10) nach einem der vorangehenden Ansprüche,
**dadurch gekennzeichnet, dass** die Fasenkante (26, 28) bezüglich der Reibfläche (24) konvex gekrümmt verläuft.

4. Bremsbelaganordnung (10) nach einem der vorangehenden Ansprüche,
**dadurch gekennzeichnet, dass** die Fasenkante (26, 28) kreisbogenförmig gekrümmt ist.

5. Bremsbelaganordnung (10) nach Anspruch 4,
**dadurch gekennzeichnet, dass** die Fasenkante (26, 28) an der vorlaufenden Seite und an der nachlaufenden Seite jeweils kreisbogenförmigen Verlauf aufweist, wobei die Kreisbögen mit im wesentlichen gleichem Radius ausgebildet ist.

6. Verfahren zum Herstellen einer Bremsbelaganordnung (10) für eine Scheibenbremse nach einem der vorangehenden Ansprüche, wobei die Bremsbelaganordnung (10) einen Bremsbelagträger (12) und einen daran angebrachten Reibbelag (14) aufweist, der zur Erzielung einer Reibwirkung mit einer Reibfläche (24) an eine Bremsscheibe anlegbar ist, wobei der Reibbelag (14) wenigstens entlang eines Randbereiches, der sich im wesentlichen in radialer Richtung erstreckt, mit einer Fase (20, 22) versehen ist, die an einer Fasenkante (26, 28) in die Reibfläche (24) übergeht,
**dadurch gekennzeichnet, dass** die Fasenkante (26, 28) in einem einzigen materialabtragenden Fertigungsschritt hergestellt wird, bei dem ein materialabtragendes Werkzeug entlang einer dem gekrümmten Verlauf der Fasenkante (26, 28) entsprechenden Bearbeitungsbahn geführt wird, oder bei dem die Bremsbelaganordnung entlang einer dem gekrümmten Verlauf der Fasenkante (26, 28) entsprechenden Bearbeitungsbahn relativ zu einem materialabtragenden Werkzeug geführt wird.

7. Verfahren nach Anspruch 6,
**dadurch gekennzeichnet, dass** die Bearbeitungsbahn kreisbogenförmig ist.

8. Verfahren nach Anspruch 6 oder 7,
**dadurch gekennzeichnet, dass** die Fase in einem einzigen Schleifbearbeitungsschritt hergestellt wird.

## Claims

1. Brake pad arrangement (10) for a disc brake having a brake pad carrier (12) and a friction pad (14) which is attached thereto and can be laid with a friction surface (24) against a brake disc to obtain a friction effect, the friction pad (14) being provided with a chamfer (20, 22), at least along a border region extending substantially in the radial direction, which chamfer merges into the friction surface (24) at a chamfer edge (26, 28),
**characterised in that** the chamfer edge (26, 28) has a continuously curved course, and **in that** the chamfer (20, 22) is produced in a single material-removing production step, in which a material-removing tool is guided along a machining path corresponding to the curved course of the chamfer edge (26, 28), or in which the brake pad arrangement (10) is guided along a machining path, corresponding to the curved course of the chamfer edge (26, 28), relative to the material-removing tool.

2. Brake pad arrangement (10) according to Claim 1,
**characterised in that** the chamfer (20, 22) is formed at a leading side or/and a trailing side of the friction pad (14), with respect to the direction of rotation of the brake disc.

3. Brake pad arrangement (10) according to one of the preceding claims,
**characterised in that** the chamfer edge (26, 28) has a convex-curved course with respect to the friction surface (24).

4. Brake pad arrangement (10) according to one of the preceding claims,
**characterised in that** the chamfer edge (26, 28) is curved in a circular arc shape.

5. Brake pad arrangement (10) according to Claim 4,
**characterised in that** the chamfer edge (26, 28) has a circular arc-shaped course in each case at the leading side and at the trailing side, the circular arcs being formed with a substantially equal radius.

6. Method for producing a brake pad arrangement (10) for a disc brake, in particular according to one of the preceding claims, the brake pad arrangement (10) having a brake pad carrier (12) and a friction pad (14) which is attached thereto and can be laid with a friction surface (24) against a brake disc to obtain a friction effect, the friction pad (14) being provided with a chamfer (20, 22), at least along a border region extending substantially in the radial direction, which chamfer merges into the friction surface (24) at a chamfer edge (26, 28),
**characterised in that** the chamfer edge (26, 28) is produced in a single material-removing production step, in which a material-removing tool is guided along a machining path corresponding to the curved course of the chamfer edge (26, 28), or in which the brake pad arrangement is guided along a machining path, corresponding to the curved course of the chamfer edge (26, 28), relative to a material-removing tool.

7. Method according to Claim 6,
**characterised in that** the machining path is circular arc-shaped.

8. Method according to Claim 6 or 7,
**characterised in that** the chamfer is produced in a single grinding machining step.

## Revendications

1. Ensemble de garniture de frein (10) pour un frein à disque, comportant un support de garniture de frein (12) et une garniture de friction (14) montée sur celui-ci, susceptible d'être appliquée par une surface de friction (24) sur un disque de frein pour obtenir un effet de frottement, la garniture de friction (14) étant pourvue, au moins le long d'une zone de bord s'étendant sensiblement en direction radiale, d'un chanfrein (20, 22) qui passe à la surface de friction (24) au niveau d'une arête de chanfrein (26, 28),
**caractérisé en ce que** l'arête de chanfrein (26, 28) présente une courbure constante et **en ce que** le chanfrein (20, 22) est réalisé en une seule étape de fabrication par enlèvement de matière, au cours de laquelle un outil d'enlèvement de matière est guidé le long d'une trajectoire d'usinage correspondant au tracé curviligne de l'arête de chanfrein (26, 28), ou au cours de laquelle l'ensemble de garniture de frein (10) est guidé le long d'une trajectoire d'usinage correspondant au tracé curviligne de l'arête de chanfrein (26, 28) par rapport à l'outil d'enlèvement de matière.

2. Ensemble de garniture de frein (10) selon la revendication 1,
**caractérisé en ce que** le chanfrein (20, 22) est formé sur un côté antérieur ou/et un côté postérieur de la garniture de friction (14) par rapport au sens de rotation du disque de frein.

3. Ensemble de garniture de frein (10) selon l'une des revendications précédentes,
**caractérisé en ce que** l'arête de chanfrein (26, 28) présente une courbure convexe par rapport à la surface de friction (24).

4. Ensemble de garniture de frein (10) selon l'une des revendications précédentes,
**caractérisé en ce que** l'arête de chanfrein (26, 28) présente une courbure en arc de cercle.

5. Ensemble de garniture de frein (10) selon la revendication 4,
**caractérisé en ce que** l'arête de chanfrein (26, 28) présente un tracé en arc de cercle sur le côté antérieur et sur le côté postérieur, les arcs de cercle étant sensiblement de même rayon.

6. Procédé de fabrication d'un ensemble de garniture de frein (10) pour un frein à disque selon l'une des revendications précédentes, l'ensemble de garniture de frein (10) comportant un support de garniture de frein (12) et une garniture de friction (14) montée sur celui-ci, susceptible d'être appliquée par une surface de friction (24) sur un disque de frein pour obtenir un effet de frottement, la garniture de friction (14) étant pourvue, au moins le long d'une zone de bord s'étendant sensiblement en direction radiale, d'un chanfrein (20, 22) qui passe à la surface de friction (24) au niveau d'une arête de chanfrein (26, 28),
**caractérisé en ce que** l'arête de chanfrein (26, 28) est réalisée en une seule étape de fabrication par enlèvement de matière, au cours de laquelle un outil d'enlèvement de matière est guidé le long d'une trajectoire d'usinage correspondant au tracé curviligne de l'arête de chanfrein (26, 28), ou au cours de laquelle l'ensemble de garniture de frein (10) est guidé le long d'une trajectoire d'usinage correspondant au tracé curviligne de l'arête de chanfrein (26, 28) par rapport à un outil d'enlèvement de matière.

7. Procédé selon la revendication 6,
**caractérisé en ce que** la trajectoire d'usinage est un arc de cercle.

8. Procédé selon la revendication 6 ou 7,
**caractérisé en ce que** le chanfrein est réalisé en une seule étape de rectification.
